# EUROPEAN PATENT APPLICATION

(11) **EP 4 851 958 A1**
(43) Date of publication of application: **09.12.2026**
(21) Application number: 26166750.5
(22) Date of filing: 23.03.2026
(51) Int. Cl.: G06V 20/69, G06V 10/34, G06V 10/46, G06V 10/82, G06V 10/10

(54) **NEMATODE ANALYSIS SYSTEM AND METHOD**

(30) Priority: 02.06.2025 WO PCT/EP2025/065216
(71) Applicant: Veridi Technologies BV, 2513 CN The Hague (NL)
(72) Inventor: JANISSEN, Richard, 2513 The Hague (NL); KURFÜRST, Vojtech, 2513 The Hague (NL); MATAR, Ziad, 2513 The Hague (NL)
(74) Representative: Eisenführ Speiser

(57) **Abstract**

The invention provides a nematode analysis system (1), comprising an image providing module (10) for providing an image (2) of a liquid soil sample (3), a deep-learning-based image analysis module (20) for detecting nematodes (4) within the image (2), and a deep-learning-based nematode classification module (30) for classifying the detected nematodes (4) based on their morphology, wherein the deep-learning-based image analysis module (20) is configured to segment the detected nematodes using a second deep-learning model, wherein the deep-learning-based image analysis module (20) is configured to skeletonize the detected and segmented nematodes and to determine two endpoints of the detected nematodes (4) based on the detected, segmented and skeletonized nematodes.

## Description

The invention relates to a nematode analysis system and to a nematode analysis method. The invention also relates to the use of an embodiment of the nematode analysis system for creating plant-parasitic nematode species databases.

### BACKGROUND OF THE INVENTION

Nematodes are microscopic, cylindrical worms that belong to the phylum Nematoda. They are one of the most diverse and abundant groups of organisms on earth, found in a wide range of environments including soil, water, and as parasites in plants, animals, and humans.

For example, plant-parasitic nematodes (PPNs) can cause a wide range of diseases in plants, leading to significant agricultural losses. These nematodes parasitize roots and the like of the plants, causing damage that can reduce plant growth, yield, and overall health of the plants, causing billions of losses yearly in agriculture worldwide. Examples of well-known plant parasitic nematodes include root-knot nematodes, cyst nematodes and root-lesion nematodes.

The ability to analyze the nematodes that exist in a given environment can provide critical insights for key applications, such as agricultural management, soil health assessment, and ecological monitoring.

Current nematode analysis methods rely strongly on manual inspection of nematodes under a microscope by highly trained nematologists. This is expensive, error-prone, and time-consuming, preventing the large-scale use of such methods. It would therefore be desirable to provide a nematode analysis system and method that can improve the efficiency of the nematode analysis.

### SUMMARY OF THE INVENTION

It is an object of the invention to provide a nematode analysis system and a nematode analysis method, which can improve the efficiency of the nematode analysis.

According to an aspect of the invention, a nematode analysis system is provided, comprising:
- an image providing module for providing an image of a liquid soil sample;
- a deep-learning-based image analysis module for detecting nematodes within the image, and;
- a deep-learning-based nematode classification module for classifying the detected nematodes based on their morphology.

The nematode analysis system of the invention can solve one or more of the above-mentioned problems associated with the manual inspection. For example, the nematode analysis system can be less expensive and/or less error-prone, and/or allow for a less time consuming analysis compared to manual inspection. This can enable the large-scale use of nematode analysis methods.

The image providing module may comprise an image providing hardware for providing an image of a liquid soil sample. The image providing module may be e.g. an image providing module with a magnification of 4x or higher and/or a numerical aperture of 0.1 or higher. In an embodiment of the invention, the image providing module may be e.g. a digital camera with a pixel pitch of 6.5 µm or smaller and/or a resolution of 1 MP or higher. Alternatively, the image providing module may comprise a data interface configured to access an image stored in a local or remote memory, such as a hard disk drive, a solid-state memory, an optical storage medium, or the like. The image providing module may also comprise a communication interface, for example, a wired or wireless network interface, arranged to receive an image from an external source, such as a server or a cloud-hosted storage system. In certain embodiments, the image providing module may comprise a combination of image providing hardware and memory access or communication means. The image provided by the image providing module may represent at least a portion of the liquid soil sample. The image may contain one or more nematodes suspended in the liquid soil sample. In some embodiments, the image may contain only a single nematode, while in other embodiments the image may contain multiple nematodes or partial representations thereof.

Preferably, the image is a mosaic image. In this case, the image providing module preferably comprises:
- an imager including optics and an image sensor, and;
- a sample support for supporting the liquid soil sample,
wherein the image providing module is configured to automatically move the imager along an acquisition path, to automatically acquire a plurality of partially overlapping sub-images of the liquid soil sample from different positions on the acquisition path, and to automatically stitch the sub-images together to generate the image.

Since the imager is automatically moved along an acquisition path and a plurality of partially overlapping sub-images of the liquid soil sample are automatically acquired from different positions on the acquisition path, the sample support and, thus, the liquid soil sample, can be fixed. This can reduce the risk of disturbances of the liquid soil sample during the acquisition of the image thereof, which can lead to a higher quality image. For example, the imager can be attached to an automated motorized translation stage, which can move the imager along an acquisition path in an x-y-plane that is substantially parallel to the liquid soil sample and can additionally move the optics in a z-direction that is substantially perpendicular to the liquid soil sample. In an example, the resolution of the automated motorized translation stage is 20 nanometer in the x-y-plane and 1 micrometer in the z-direction. It is preferred that the image providing module is configured to control the distance between the optics and the liquid soil sample (z-direction) by an autofocus function, particularly, by a hardware autofocus, e.g., a NIR (near-infrared) laser autofocus. The liquid soil sample can be provided in a microplate, such as a 6, 12 or 24-well microplate, and the sample support can support the microplate.

Since the image is generated by stitching together the partially overlapping sub-images, a high-resolution image can be generated. For example, each sub-image can have a resolution of about 4000 x 3000 pixels and the image can be generated from ~1,700 sub-images (12-well microplate) to have a size of 110,000 x 110,000 pixels. For a 6-well microplate, ~3,860 sub-images result in an image of 175,000 x 175,000 pixels, and for a 24-well microplate, ~770 sub-images results in an image of 78,000 x 78,000 pixels. The stitching of the sub-images can be based on a global optimization algorithm, which minimizes the differences in the overlapping regions of the sub-images over the whole image. The global optimization algorithm can be initialized with the x-y-positions of the sub-images corresponding to the different positions on the acquisition path. During the acquisition of the image, each acquired sub-image can be displayed live as part of an initial (non-optimized, partial) that can be shown on an external or internal display of the nematode analysis system.

It is preferred that the deep-learning-based image analysis module is configured to down-scale the image to generate a down-scaled image of lower spatial resolution and to obtain primary bounding boxes corresponding to the nematodes based on the down-scaled image.

It has been found by the present inventors that the detection of the nematodes can be performed with high quality at a lower spatial resolution. By downscaling the image to generate a down-scaled image of lower spatial resolution and by obtaining primary bounding boxes corresponding to the nematodes based on the down-scaled image, it is therefore possible to reduce the amount of processing without compromising the quality of the nematode detection.

It is further preferred that the deep-learning-based image analysis module is configured to convert the down-scaled image into a multi-resolution representation comprising multiple spatial resolution levels and to obtain the primary bounding boxes based on all of the multiple spatial resolution levels. This can be advantageous, because depending on the size of a particular nematode, it may be detected more reliably and/or with better quality at a particular spatial resolution level, whereas a nematode of a different size may be detected more reliably and/or with better quality at a different spatial resolution level.

Preferably, the deep-learning-based image analysis module is configured to use a first deep-learning model to obtain the primary bounding boxes. The first deep-learning model can be an object detection model that identifies and classifies multiple objects (here, nematodes) in an image in a single pass, for example, it can be an object detection model from the family of YOLO ("You only Look Once") object detection models, such as YOLOX (see, for example, X. Cong et al., "A Review of YOLO Object Detection Algorithms based on Deep-learning", Frontiers in Computing and Intelligent Systems, Vol. 4, No. 2, June 2023, or Z. Ge et al., "YOLOX: Exceeding YOLO Series in 2021", https://arxiv.org/abs/2107.08430). The use of a single pass object detection models can be particularly advantageous, since such models can combine a high detection speed with a high detection precision. Alternatively, another object detection model could be used, for example, a model of the Ultralytics YOLO Model Family (e.g., YOLO11, YOLO10, et cetera) (see, for example, https://github.com/ultralytics/ultralytics), or an RTMDet model (see, for example, C. Lyu et al., "RTMDet: An Empirical Study of Designing Real-Time Object Detectors", https://arxiv.org/abs/2212.07784), or an RTMDet-R2 model (see, for example, https://github.com/Zeba-Xie/RTMDet-R2).

It is preferred that the deep-learning-based image analysis module is configured to obtain the primary bounding boxes based on a plurality of partially overlapping sub-images of the multi-resolution representation that are selected with an overlapping sliding window and to perform test-time augmentation on the sub-images during an inference stage of the first deep-learning model. By applying the first deep-learning model to partially overlapping sub-images of the multi-resolution representation that are selected with an overlapping sliding window, it is possible to process the still large spatial resolution levels. Moreover, by performing test-time augmentation on the sub-images during an inference stage of the first deep-learning model, the robustness and/or accuracy of the first deep-learning model during the inference stage can be improved without requiring additional training. The test-time augmentation can comprise various kinds of transformations of the sub-images, such as rotations, translations, scaling, flipping, color adjustments et cetera.

It is further preferred that the deep-learning-based image analysis module is configured to obtain the primary bounding boxes together with the following metadata that is provided for each primary bounding box:
(i) an area size value indicating the area size of the primary bounding box,
(ii) a confidence value indicating a confidence that the primary bounding box includes a nematode,
(iii) a class value indicating whether the nematode is of a class corresponding to a whole nematode or a class corresponding to a part of a nematode, and
(iv) a class probability value indicating a probability that the nematode is of the class indicated by the class value,
wherein the deep-learning-based image analysis module is configured to perform a non-max suppression on the obtained primary bounding boxes, wherein the non-max suppression is based on the area size values, the confidence values, the class values, and the class probability values of the obtained primary bounding boxes.

Non-maximum suppression is a function used in computer vision and object detection that selects the best bounding box of a detected object when multiple overlapping boxes have been detected. For example, in a conventional method, bounding boxes are obtained together with a confidence value indicating a confidence that the bounding box includes the object. The method then sorts the bounding boxes based on their confidence values and selects the bounding box with the highest confidence score. The selected bounding box's Intersection over Union, IoU, is then calculated against all other remaining bounding boxes. (The loU of two bounding boxes A and B, in mathematical terms, is the ratio of (a) the size of the intersection A ∩ B of the two bounding boxes and (b) the size of the union A ∪ B of the two bounding boxes. Its value indicates the percentage of overlap between the two bounding boxes.) If any other bounding box has an IoU with the selected bounding box that exceeds a threshold, it is deleted. This process ensures that from a group of overlapping bounding boxes, only the one with the highest confidence score is preserved, wherein the threshold is used to select the percentage of overlap that will be tolerated by the method, i.e., bounding boxes with a lower percentage of overlap will not be deleted.

According to the invention, the first deep-learning model outputs a richer set of metadata (i) to (iv) and the non-max suppression is based on the richer set of metadata. For example, instead of using just the confidence value for sorting the obtained bounding boxes, the sorting may be based on a value $val = log \left({v}_{as}\right) ⋅ {v}_{cp} ⋅ {{v}_{c}}^{2} ,$ where *vₐₛ* is the area size value, *v_{cp}* is the class probability value (e.g., a value in the range of 0.0 to 1.0), and *v_{c}* is the confidence value of an obtained primary bounding box (e.g., a value in the range of 0.0 to 1.0). By basing the sorting of the obtained primary bounding boxes on the value *val,* the confidence that the primary bounding box includes a nematode is penalized in the non-max suppression (by *v_{c}* being squared) and a preference for larger bounding boxes is encoded (by including log(*vₐₛ*)). Of course, *val* may also be determined in a mathematically equivalent manner, e.g., by replacing *v_{c}*² with *v_{c}* · *v_{c}*.

Preferably, the non-max suppression is further based on a comparison of a Distance Intersection over Union, DloU, between two obtained primary bounding boxes, respectively. The DloU is an enhancement of IoU by penalizing the distance between the center points of two bounding boxes. For example, the DIoU between two bounding boxes A and B may be determined as $DIoU = IoU - \frac{{ρ}^{2} \left(a, b\right)}{{c}^{2}} ,$ where *ρ*²(**a**, **b**) is the Euclidean distance between the center points of the two bounding boxes A and B and c is the diagonal length of the smallest enclosing box covering both A and B. The use of DloU in the non-max suppression may be advantageous in that is may encourage a faster and more stable convergence during training, it may help with non-overlapping boundary boxes, i.e., it may give useful gradients even when the loU is 0, and it may produce a better localization performance than the plain IoU.

The present inventors have found that basing the non-max suppression on the richer set of metadata and on a comparison of DloU between two obtained primary bounding boxes, respectively, is particularly helpful when many nematodes are overlapping each other in the image. The non-max suppression can then improve the deletion of obsolete detections of a nematode while keeping the detection of other nematodes, even when their degree of overlap is large.

It is preferred that the deep-learning-based image analysis module is configured to crop out nematode images corresponding to the obtained primary bounding boxes from the image for further processing. By performing the further processing, or at least a part of it, on nematode images that are cropped out from the image - rather than on the whole image -, the further processing, or the at least a part of it, can be performed at the high spatial resolution of the image without, however, requiring memory corresponding to the whole image.

It is further preferred that the nematode images are cropped out with an additional margin on all sides of the obtained primary bounding boxes. This adds more context to the cropped out nematode images and serves as a protection against partial nematode image crops. It can also be useful for particular segmentation models, as these models can then "see" the nematode with its surroundings. The additional margin is preferably in the range of 1% to 10%, more preferably, 3% to 8%, for example 5%, of the width resp. height of the corresponding primary bounding box.

Alternatively, the further processing may be performed on the image provided by the image providing module. For example, the sizes and positions of the primary bounding boxes may be converted to sizes and positions in the image provided by the image providing module. The further processing my also be performed withan additional margin on all sides of the converted primary bounding boxes. In another example, if the image providing module comprises a data interface configured to access an image stored in a local or remote memory, bounding boxes corresponding to nematodes may already be provided with the stored image.

Preferably, the deep-learning-based image analysis module is configured to segment the detected nematodes using a second deep-learning model. The second deep-learning model can be a known segmentation model, such as a SAM2 model ("Segment Anything Model 2") (see, for example, N. Ravi et al., "SAM 2: Segment Anything in Images and Videos", https://arxiv.org/abs/2408.00714). The SAM2 model *inter alia* provides a high segmentation accuracy at a comparably fast runtime compared to its predecessor. This approach allows for nematode segmentation without the need for a custom segmentation model for which data creation is resource expensive. However, in the case of resource abundance, an instance segmentation model may be preferably be used due to its greater ability to segment overlapping nematodes (see, for example, L. Chen et al., "A CNN Framework Based on Line Annotations for Detecting Nematodes in Microscopic Images", in IEEE 17th International Symposium on Biomedical Imaging (ISBI), Iowa City, IA, USA, 2020). Alternatively, another segmentation model could be used, for example, a fine-tuned SAM2 model, an instance segmentation model (see, for example, K. Chen et al., "MMDetection: Open MMLab Detection Toolbox and Benchmark", https://arxiv.org/abs/1906.07155), a YOLO11 segmentation model (see, for example, https://github.com/ultralytics/ultralytics), or a SAM-HQ model (see, for example, L. Ke et al., "Segment Anything in High Quality", https://arxiv.org/abs/2306. 01567). Furthermore, in the case of resource abundance and very high bandwidth, the object or instance segmentation model may be merged together with the first deep learning model, whereby the first deep learning model is replaced with segmentation. This approach, which performs segmentation directly on the image or nematode images, respectively, has been illustrated in K. K. Saikai et al., "Counting nematodes made easy: leveraging Al-powered automation for enhanced efficiency and precision" Frontiers in Plant Science, Vol. 15, 2024. For its industrial application, the aforementioned custom logic to non-max suppression may still be applied on segmentations in place of bounding boxes.

It is preferred that the deep-learning-based image analysis module is configured to skeletonize the detected and segmented nematodes and to determine two endpoints of the detected nematodes based on the detected, segmented and skeletonized nematodes. The two endpoints of the detected nematodes are assumed to correspond to the head and tail morphological regions of the detected nematodes, which provide important information for the classification of the detected nematodes. Knowing the endpoints of the detected nematodes can then help in detecting the head and tail (and, possible, other) morphological regions of the detected nematodes.

It is further preferred that the deep-learning-based image analysis module is configured to obtain a graph representation of a detected, segmented and skeletonized nematode, to determine possible endpoints using a kernel function that considers a count of neighboring segments of the graph representation, and to determine the possible endpoints with the longest path along the graph representation therebetween of the detected, segmented and skeletonized nematode to be the two endpoints of the corresponding detected nematode. By means of this process, the two endpoints of a detected nematode can be determined with a high degree of robustness and precision. Moreover, it allows for the extraction of further information about the detected nematode, such as a length or a width (e.g. perpendicular to the middle of the skeleton towards the segmented border) thereof. This further information can be helpful if a taxonomy classification of the detected nematode is to be performed (see below).

Preferably, the deep-learning-based image analysis module is configured to use a third deep-learning model to obtain secondary bounding boxes corresponding to the head and, optionally, tail and vulva morphological regions of a detected nematode, respectively, based on the image or the corresponding nematode image, respectively. As mentioned above, the head and tail morphological regions - as well as the vulva morphological region - of the detected nematodes provide important information for the classification of the detected nematodes. The third deep-learning model can be a known object detection model, such as a RTMDet model ("Real-Time Multi-task Detection"), that is trained on custom training data (see, for example, C. Lyu et al., "RTMDet: An Empirical Study of Designing Real-Time Object Detectors", https:// arxiv.org/abs/ 2212.07784). The RTMDet model is particularly advantageous in that it is designed to balance detection accuracy and speed, making it suitable for both high-end and real-time deployment scenarios. Alternatively, another object detection model could be used, for example, a YOLOX model (see, for example, Z. Ge et al., "YOLOX: Exceeding YOLO Series in 2021", https://arxiv.org/abs/ 2107.08430) or a RF-DETR model (see, for example, R. Sapkota et al., "RF-DETR Object Detection vs YOLOv12: A Study of Transformer-based and CNN-based Architectures for Single-Class and Multi-Class Greenfruit Detection in Complex Orchard Environments Under Label Ambiguity", https://arxiv.org/abs/2504.13099).

It is preferred that the deep-learning-based image analysis module is configured to perform a non-max suppression on the obtained secondary bounding boxes, wherein the non-max suppression considers whether the secondary bounding boxes include the endpoints of the detected nematode. As with the obtained primary bounding boxes, the secondary boundary boxes obtained by the third deep-learning model can be overlapping. In order to delete obsolete detections, the present inventors have developed a suitable non-max suppression. As the two endpoints of the detected nematodes are assumed to correspond to the head and tail morphological regions of the detected nematodes, considering whether the secondary bounding boxes include the endpoints of the detected nematode can help to delete secondary bounding boxes that do not correspond to the head and tail morphological regions of the detected nematode. For head/tail detections that do include the nematode skeleton endpoints, the non-max suppression further considers the prediction confidence and a more traditional NMS to only keep the prediction with the highest confidence. In case of two head or two tail detections on both sides of the nematodes, the one with the higher confidence is inversed to the other one to keep one head and one tail per nematode. Any detections that have no overlap with the detected nematode segmentation are not considered for non-max suppression.

It is further preferred that the deep-learning-based image analysis module is configured to determine for each detected nematode a degree of blur of the whole detected nematode as well as of the head and, optionally, tail and vulva morphological regions thereof based on the image or the corresponding nematode image, respectively. The present inventors have found that blur in the image or the nematode images, respectively, both with respect to the whole detected nematodes and the head and, optionally, tail and vulva morphological regions thereof, can affect the robustness and reliability of the classification of the detected nematodes. Knowing the degree of blur can then help in distinguishing between reliable and unreliable classifications and identifying whether an unreliable classification is caused by nematode blur or a model's lack of confidence in a prediction.

The determination of the degree of blur can, for example, apply the Laplacian operator, which measures how quickly pixel values change, with 4 different kernel sizes. Sharp areas have high values, blurry areas have low values. First, the algorithm can take the image or a nematode image, respectively, and a segmentation mask and calculate the average blur level by applying the Laplacian operator 4 times, summing the results, and returning the percentage of pixels that are considered in focus based on a comparison with a threshold value.

Preferably, the deep-learning-based image analysis module is configured to perform a histogram equalization on the segmented image or the segmented nematode images, respectively. This helps to ensure a consistent brightness and contrast in the image or between the nematode images, respectively, which can improve the classification of the detected nematodes.

It is preferred that the deep-learning-based nematode classification module for classifying the detected nematodes based on their morphology is a deep-learning-based nematode functional guild classification module for classifying the detected nematodes according to their functional guild based on their morphology.

The term "functional guild" refers to a group of organisms that have similar growth, reproductive and metabolic characteristics and perform the same ecological function. It comprises bacterial feeders, fungal feeders, plant-parasitic (herbivores), predators, and omnivores. The functional guild is detectable via features of the nematode morphology as is the nematode taxonomy down to species level.

It is preferred that the deep-learning-based nematode functional guild classification module is configured to use a fourth deep-learning model to classify the detected nematodes according to their functional guild to obtain a class of a detected nematode with respect to the functional guild, wherein the fourth deep-learning model is applied only on the head morphological region of the detected nematodes. It has been found by the present inventors, that a robust and reliable guild classification can be achieved based on just the head morphological region of the detected nematodes. Therefore, processing requirements can be reduced compared to a guild classification that is based also on further morphological regions (e.g., the tail and vulva morphological regions) of the detected nematodes. The fourth deep-learning model can be a known image recognition model, such as a ResNet152 model (see, for example, K. He et al., "Deep Residual Learning for Image Recognition", https:// arxiv.org/abs/1512. 03385). Alternatively, another image recognition model could be used, for example, an EfficientNet model, a ConvNet model, a ResNext model or another ResNet variant.

It is further preferred that the nematode analysis system further comprises:
- a deep-learning-based nematode taxonomy classification module for classifying the detected nematodes according to their taxonomy based on their morphology.

Classifying the detected nematodes further according to their taxonomy provides detailed information about which nematodes are present in the liquid soil sample (and, thus, e.g. in the environment from which the soil sample was taken). This can provide critical insights for key applications, such as agricultural management, soil health assessment, and ecological monitoring.

Preferably, the deep-learning-based nematode taxonomy classification module is configured to classify a detected nematode according to one or more taxonomy levels using a fifth deep-learning model that is specific to the class of the detected nematode with respect to the functional guild to obtain a class of the detected nematode with respect to each of the one or more taxonomy levels. For example, if the functional guild of the detected nematode is plant-parasitic, the fifth deep-learning model that is used for the taxonomy classification is specific to plant-parasitic nematodes. If the functional guild of the detected nematode is another functional guild, e.g. bacterial feeders, the fifth deep-learning model that is used for the taxonomy classification is specific to bacterial feeders. This allows to decrease the number of nematodes that may be unknown due to lack of training at a particular taxonomy level. The one or more taxonomy levels can be, for example, the family, genus, and species of the detected nematode. Similar to the fourth deep-learning model, the fifth deep-learning model can be a known image recognition model, such as a ResNet152 model (see, for example, K. He et al., "Deep Residual Learning for Image Recognition", https:// arxiv.org/abs/1512.03385). Alternatively, another image recognition model could be used, for example, an EfficientNet model, a ConvNet model, a ResNext model or another ResNet variant.

It is preferred that the fifth deep-learning model comprises multiple deep-learning models that each are applied on a different morphological region of the detected nematode, wherein the classification by the fifth deep-learning model makes use of outputs of the multiple deep-learning models. For example, one deep-learning model can be applied on the head morphological region of the detected nematode, another deep-learning model can be applied on the tail morphological region of the detected nematode, and yet another deep-learning model can be applied on the vulva morphological region of the detected nematode, wherein outputs of these deep-learning models are fed into a larger "master" model which aggregates the outputs into a common prediction.

It is further preferred that the fifth deep-learning model has been trained using a hierarchical loss function, which provides a stronger penalty for classification errors at higher taxonomy levels than for classification errors at lower taxonomy levels.

It is preferred that the nematode analysis system comprises:
- a local processing component, and
- a cloud-hosted processing component,
wherein the nematode analysis system is configured to distribute its processing between the local processing component and the cloud-hosted processing component.

For example, the down-scaling of the image to generate a down-scaled image of lower spatial resolution may be performed on the local processing component. The down-scaled image may then be transmitted to the cloud-hosted processing component, where the conversion of the down-scaled image into a multi-resolution representation comprising multiple spatial resolution levels and the obtaining of the primary bounding boxes based on all of the multiple spatial resolution levels may be performed. The primary bounding boxes may then be transmitted back to the local processing component, where the nematode images corresponding to the obtained primary bounding boxes are cropped out from the image for further processing. The nematode images may then be transmitted to the cloud-hosted processing component, where the further processing of the deep-learning-based image analysis module as well as the processing of the deep-learning-based nematode classification module and, optionally, the processing of the deep-learning-based nematode taxonomy classification module is performed.

According to a further aspect of the invention, a use of the nematode analysis system claim 19 or 20 for creating a plant-parasitic nematode species database is provided, wherein the liquid soil sample is dominated by a monoculture of a single plant-parasitic nematode species, but also comprises nematodes of one or more non-plant-parasitic species, wherein the deep-learning-based nematode functional guild classification module is configured to classify the detected nematodes according to their plant-parasitic and non-plant-parasitic functional guild to create the plant-parasitic nematode species database. For example, nematodes classified in the deep-learning-based nematode functional guild classification step as belonging to the plant-parasitic functional guild are of the single plant-parasitic nematode species in the liquid soil sample. Therefore, after removing all non-plant-parasitic nematodes from the culture, only the single plant-parasitic nematode species remains. When this process is performed for multiple different species and according monocultures, one is left with one species from each of the monocultures. When these are combined, a database of different plant-parasitic nematode species is generated with ground-truth species labels. This set of nematode images can then form the dataset needed to train a deep-learning model that can classify different plant-parasitic nematodes based on their morphological features visible in their corresponding images.

According to a further aspect of the invention, a nematode analysis method is provided, comprising:
- an automated image providing step of providing an image of a liquid soil sample;
- a deep-learning-based image analysis step of detecting nematodes within the image, and;
- a deep-learning-based nematode classification step of classifying the detected nematodes based on their morphology.

It is understood that the nematode analysis system of claim 1, the use of the nematode analysis system of claims 19 or 20 for creating a plant-parasitic nematode species database of claim 27, and the nematode analysis method of claim 28 have similar and/or identical preferred embodiments, in particular, as defined in the dependent claims.

It is also understood that a preferred embodiment of the invention can be any combination of the independent claims with the respective dependent claim.

### BRIEF DESCRIPTION OF THE FIGURES

Preferred embodiments of the invention are described in more detail in the following with reference to the attached figures, wherein
- Fig. 1: shows schematically and exemplarily an embodiment of a nematode analysis system,
- Fig. 2: shows schematically and exemplarily an embodiment of an image providing module,
- Fig. 3: shows schematically and exemplarily the acquisition of an image,
- Fig. 4: shows schematically and exemplarily the obtaining of primary bounding boxes corresponding to the nematodes based on the down-scaled image,
- Fig. 5: shows schematically and exemplarily the cropping out of nematode images corresponding to the obtained primary bounding boxes from the image for further processing,
- Fig. 6: shows schematically and exemplarily the obtaining of secondary bounding boxes corresponding to the head and optionally, tail and vulva morphological regions of a detected nematode,
- Fig. 7: schematically and exemplarily shows how multiple deep-learning models are each applied on a different morphological region of the detected nematode and outputs of these deep-learning models are fed into a larger "master" model which aggregates the outputs into a common prediction,
- Fig. 8: schematically and exemplarily shows a local processing component and a cloud-hosted processing component comprised by the nematode analysis system, and
- Fig. 9: shows a flow diagram exemplarily illustrating a nematode analysis method.

### DETAILED DESCRIPTION OF THE EMBODIMENTS

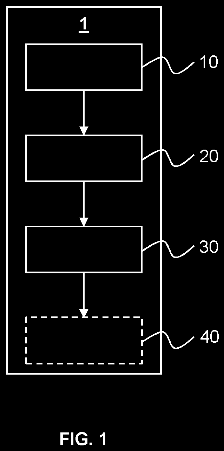

Fig. 1 shows schematically and exemplarily an embodiment of a nematode analysis system 1. The nematode analysis system 1 comprises an image providing module 10 for providing an image 2 of a liquid soil sample 3, a deep-learning-based image analysis module 20 for detecting nematodes 4 within the image 2, and a deep-learning-based nematode classification module 30 for classifying the detected nematodes 4 based on their morphology.

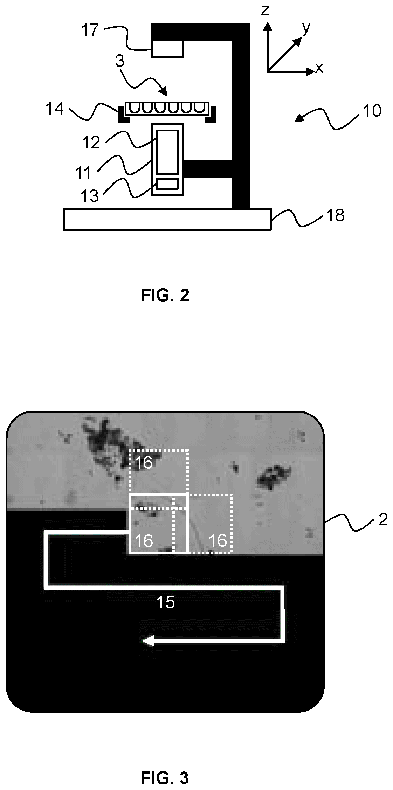

An embodiment of the image providing module 10 is schematically and exemplarily shown in Fig. 2. In this embodiment, the image is an image mosaic and the image providing module 10 comprises an imager 11 including optics 12 and an image sensor 13, and a sample support 14 for supporting the liquid soil sample 3. Here, the liquid soil sample 3 is provided in a microplate, such as a 6, 12 or 24-well microplate and the sample support 14 supports the microplate. The image providing module 10, in this embodiment, further comprises an illumination module 17, with, for example, an LED and condenser.

With further reference to Fig. 3, which shows schematically and exemplarily the acquisition of an image, the image providing module 10 is configured to automatically move the imager 11 along an acquisition path 15, to automatically acquire a plurality of partially overlapping sub-images 16 of the liquid soil sample 3 from different positions on the acquisition path 15, and to automatically stitch the sub-images together to generate the image 2. In this embodiment, the sample support 14 and, thus, the liquid soil sample 3, is fixed. This can reduce the risk of disturbances of the liquid soil sample 3 during the acquisition of the image 2 thereof, which can lead to a higher quality image 2. Here, the imager 11 is attached to an automated motorized translation stage 18, which can move the imager 11 (and, preferably, the illumination module 17) along the acquisition path 15 in an x-y-plane that is substantially parallel to the liquid soil sample 3 and can additionally move the optics 12 in a z-direction that is substantially perpendicular to the liquid soil sample 3. In an example, the resolution of the automated motorized translation stage 18 is 20 nanometer in the x-y-plane and 1 micrometer in the z-direction. It is preferred that the image providing module 10 is configured to control the distance between the optics 12 and the liquid soil sample 3 (z-direction) by an autofocus function, particularly, by a hardware autofocus, e.g., a NIR (near-infrared) laser autofocus.

Since the image 2 is generated by stitching together the partially overlapping sub-images 16, a high-resolution image 2 can be generated. For example, each sub-image 16 can have a resolution of about 4000 x 3000 pixels and the image can be generated from ~1,700 sub-images 16 (12-well microplate) to have a size of 110,000 x 110,000 pixels. For a 6-well microplate, ~3,860 sub-images 16 result in an image of 175,000 x 175,000 pixels, and for a 24-well microplate, ~770 sub-images 16 results in an image of 78,000 x 78,000 pixels. The stitching of the sub-images 16 can be based on a global optimization algorithm, which minimizes the differences in the overlapping regions of the sub-images 16 over the whole image 2. The global optimization algorithm can be initialized with the x-y-positions of the sub-images 16 corresponding to the different positions on the acquisition path 15. During the acquisition of the image 2, each acquired sub-image can be displayed live as part of an initial (non-optimized, partial) that can be shown on an external or internal display (not shown in the figures) of the nematode analysis system 1.

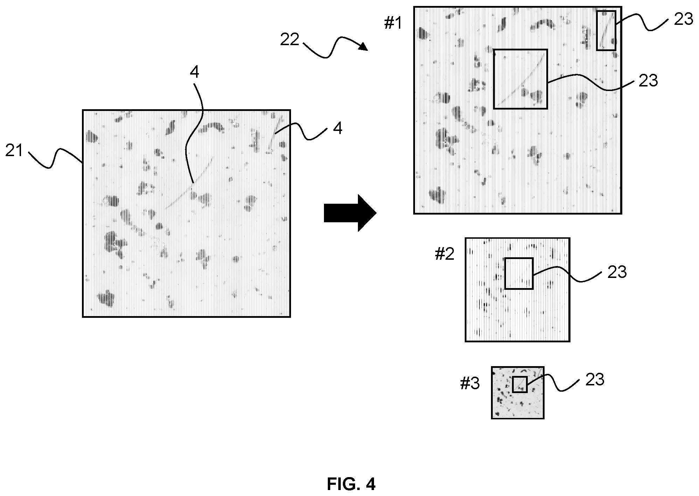

In this embodiment, the deep-learning-based image analysis module 20 is configured to down-scale the image 2 to generate a down-scaled image 21 of lower spatial resolution and to obtain primary bounding boxes 22 corresponding to the nematodes 4 based on the down-scaled image 21. This is shown in more detail in Fig. 4. In particular, the deep-learning-based image analysis module 20 is configured to convert the down-scaled image 21 into a multi-resolution representation 22 comprising multiple spatial resolution levels #1~#3 and to obtain the primary bounding boxes 23 based on all of the multiple spatial resolution levels #1~#3.

In this embodiment, the deep-learning-based image analysis module 20 is configured to use a first deep-learning model to obtain the primary bounding boxes 23. The first deep-learning model, here, is an object detection model that identifies and classifies multiple objects (here, nematodes 4) in an image in a single pass, in particular, it is an object detection model from the family of YOLO ("You only Look Once") object detection models (see, for example, X. Cong et al., "A Review of YOLO Object Detection Algorithms based on Deep-learning", Frontiers in Computing and Intelligent Systems, Vol. 4, No. 2, June 2023, or Z. Ge et al., "YOLOX: Exceeding YOLO Series in 2021", https://arxiv.org/abs/2107.08430). Alternatively, another object detection model could be used, for example, a model of the Ultralytics YOLO Model Family (e.g., YOLO11, YOLO10, et cetera) (see, for example, https://github.com/ultralytics/ultralytics), or an RTMDet model (see, for example, C. Lyu et al., "RTMDet: An Empirical Study of Designing Real-Time Object Detectors", https://arxiv.org/abs/2212.07784), or an RTMDet-R2 model (see, for example, https://github.com/Zeba-Xie/RTMDet-R2).

The deep-learning-based image analysis module 20 is configured to obtain the primary bounding boxes 23 based on a plurality of partially overlapping sub-images of the multi-resolution representation 22 that are selected with an overlapping sliding window and to perform test-time augmentation on the sub-images during an inference stage of the first deep-learning model. The test-time augmentation can comprise various kinds of transformations of the sub-images, such as rotations, translations, scaling, flipping, color adjustments et cetera.

In this embodiment, the deep-learning-based image analysis module 20 is configured to obtain the primary bounding boxes 23 together with the following metadata that is provided for each primary bounding box 23: (i) an area size value indicating the area size of the primary bounding box 23, (ii) a confidence value indicating a confidence that the primary bounding box 23 includes a nematode 4, (iii) a class value indicating whether the nematode 4 is of a class corresponding to a whole nematode or a class corresponding to a part of a nematode, and (iv) a class probability value indicating a probability that the nematode 4 is of the class indicated by the class value. The deep-learning-based image analysis module 20 is configured to perform a non-max suppression on the obtained primary bounding boxes 23, wherein the non-max suppression is based on the area size values, the confidence values, the class values, and the class probability values of the obtained primary bounding boxes 23.

As discussed above, non-maximum suppression is a function used in computer vision and object detection that selects the best bounding box of a detected object when multiple overlapping boxes have been detected. For example, in a conventional method, bounding boxes are obtained together with a confidence value indicating a confidence that the bounding box includes the object. The method then sorts the bounding boxes based on their confidence values and selects the bounding box with the highest confidence score. The selected bounding box's Intersection over Union, IoU, is then calculated against all other remaining bounding boxes. (The loU of two bounding boxes A and B, in mathematical terms, is the ratio of (a) the size of the intersection A ∩ B of the two bounding boxes and (b) the size of the union A u B of the two bounding boxes. Its value indicates the percentage of overlap between the two bounding boxes.) If any other bounding box has an IoU with the selected bounding box that exceeds a threshold, it is deleted. This process ensures that from a group of overlapping bounding boxes, only the one with the highest confidence score is preserved, wherein the threshold is used to select the percentage of overlap that will be tolerated by the method, i.e., bounding boxes with a lower percentage of overlap will not be deleted.

In this embodiment, the first deep-learning model outputs a richer set of metadata (i) to (iv) and the non-max suppression is based on the richer set of metadata. In particular, instead of using just the confidence value for sorting the obtained bounding boxes, the sorting is based on a value $val = log \left({v}_{as}\right) ⋅ {v}_{cp} ⋅ {{v}_{c}}^{2} ,$ where *vₐₛ* is the area size value, *v_{cp}* is the class probability value (e.g., a value in the range of 0.0 to 1.0), and *v_{c}* is the confidence value of an obtained primary bounding box (e.g., a value in the range of 0.0 to 1.0). By basing the sorting of the obtained primary bounding boxes 23 on the value *val,* the confidence that the primary bounding box 23 includes a nematode 4 is penalized in the non-max suppression (by *v_{c}* being squared) and a preference for larger bounding boxes 23 is encoded (by including log(*vₐₛ*)). Of course, *val* may also be determined in a mathematically equivalent manner, e.g., by replacing *v_{c}*² with *v_{c} · v_{c}*.

Here, the non-max suppression is further based on a comparison of a Distance Intersection over Union, DloU, between two obtained primary bounding boxes 23, respectively. The DIoU is an enhancement of IoU by penalizing the distance between the center points of two bounding boxes. For example, the DIoU between two bounding boxes A and B may be determined as $DIoU = IoU - \frac{{ρ}^{2} \left(a, b\right)}{{c}^{2}} ,$ where *ρ*²(**a**, **b**) is the Euclidean distance between the center points of the two bounding boxes A and B and c is the diagonal length of the smallest enclosing box covering both A and B.

In this embodiment, the deep-learning-based image analysis module 20 is configured to crop out nematode images 24 corresponding to the obtained primary bounding boxes 23 from the image 2 for further processing. In particular, here, the nematode images 24 are cropped out with an additional margin 25 on all sides of the obtained primary bounding boxes 23. This adds more context to the cropped out nematode images 24 and serves as a protection against partial nematode image crops. The additional margin is preferably in the range of 1% to 10%, more preferably, 3% to 8%, for example 5%, of the width resp. height of the corresponding primary bounding box 23.

The deep-learning-based image analysis module 20 is configured to segment the detected nematodes 4 using a second deep-learning model. In this embodiment, the second deep-learning model is a known segmentation model, in particular, the SAM2 model ("Segment Anything Model 2") (see, for example, N. Ravi et al., "SAM 2: Segment Anything in Images and Videos", https://arxiv.org/abs/2408.00714). The SAM2 model *inter alia* provides a high segmentation accuracy at a comparably fast runtime compared to its predecessor. This approach allows for nematode segmentation without the need for a custom segmentation model for which data creation is resource expensive. However, in the case of resource abundance, an instance segmentation model may be preferably be used due to its greater ability to segment overlapping nematodes (see, for example, L. Chen et al., "A CNN Framework Based on Line Annotations for Detecting Nematodes in Microscopic Images", in IEEE 17th International Symposium on Biomedical Imaging (ISBI), Iowa City, IA, USA, 2020). Alternatively, another segmentation model could be used, for example, a fine-tuned SAM2 model, an instance segmentation model (see, for example, K. Chen et al., "MMDetection: Open MMLab Detection Toolbox and Benchmark", https://arxiv.org/abs/1906.07155), a YOLO11 segmentation model (see, for example, https://github.com/ultralytics/ultralytics), or a SAM-HQ model (see, for example, L. Ke et al., "Segment Anything in High Quality", https://arxiv.org/abs/2306. 01567).

In this embodiment, the deep-learning-based image analysis module 20 is configured to skeletonize the detected and segmented nematodes and to determine two endpoints of the detected nematodes 4 based on the detected, segmented and skeletonized nematodes. The two endpoints of the detected nematodes 4 are assumed to correspond to the head and tail morphological regions of the detected nematodes 4, which provide important information for the classification of the detected nematodes 4. Knowing the endpoints of the detected nematodes 4 can then help in detecting the head and tail (and, possible, other) morphological regions of the detected nematodes 4.

In this embodiment, the deep-learning-based image analysis module 20 is configured to obtain a graph representation of a detected, segmented and skeletonized nematode, to determine possible endpoints using a kernel function that considers a count of neighboring segments of the graph representation, and to determine the possible endpoints with the longest path along the graph representation therebetween of the detected, segmented and skeletonized nematode to be the two endpoints of the corresponding detected nematode 4. By means of this process, the two endpoints of a detected nematode 4 can be determined with a high degree of robustness and precision. Moreover, it allows for the extraction of further information about the detected nematode 4, such as a length or a width (e.g. perpendicular to the middle of the skeleton towards the segmented border) thereof. This further information can be helpful if a taxonomy classification of the detected nematode 4 is to be performed (see below).

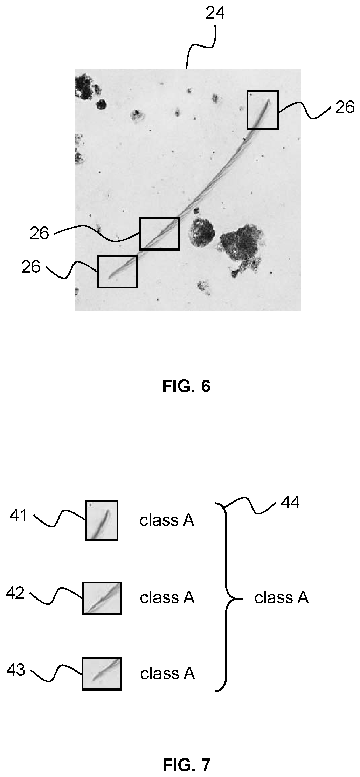

In this embodiment, the deep-learning-based image analysis module 20 is configured to use a third deep-learning model to obtain secondary bounding boxes 26 corresponding to the head and optionally, tail and vulva morphological regions of a detected nematode 4, respectively, based on the corresponding nematode image 24. This is shown schematically and exemplarily in Fig. 6. As mentioned above, the head and tail morphological regions - as well as the vulva morphological region - of the detected nematodes 4 provide important information for the classification of the detected nematodes 4. The third deep-learning model can be a known object detection model, such as RTMDet ("Real-Time Multi-task Detection"), that is trained on custom training data (see, for example, C. Lyu et al., "RTMDet: An Empirical Study of Designing Real-Time Object Detectors", https://arxiv.org/abs/2212. 07784). The RTMDet model is particularly advantageous in that it is designed to balance detection accuracy and speed, making it suitable for both high-end and real-time deployment scenarios. Alternatively, another object detection model could be used, for example, a YOLOX model (see, for example, Z. Ge et al., "YOLOX: Exceeding YOLO Series in 2021", https://arxiv. org /abs/2107.08430) or a RF-DETR model (see, for example, R. Sapkota et al., "RF-DETR Object Detection vs YOLOv12: A Study of Transformer-based and CNN-based Architectures for Single-Class and Multi-Class Greenfruit Detection in Complex Orchard Environments Under Label Ambiguity", https://arxiv.org/abs/ 2504.13099).

The deep-learning-based image analysis module 20 is configured to perform a non-max suppression on the obtained secondary bounding boxes 26, wherein the non-max suppression considers whether the secondary bounding boxes 26 include the endpoints of the detected nematode 4. As with the obtained primary bounding boxes 23, the secondary boundary boxes 26 obtained by the third deep-learning model can be overlapping. In order to delete obsolete detections, the present inventors have developed a suitable non-max suppression. As the two endpoints of the detected nematodes 4 are assumed to correspond to the head and tail morphological regions of the detected nematodes 4, considering whether the secondary bounding boxes 26 include the endpoints of the detected nematode 4 can help to delete secondary bounding boxes 26 that do not correspond to the head and tail morphological regions of the detected nematode 4. For head/tail detections that do include the nematode skeleton endpoints, the non-max suppression further considers the prediction confidence and a more traditional NMS to only keep the prediction with the highest confidence. In case of two head or two tail detections on both sides of the nematodes, the one with the higher confidence is inversed to the other one to keep one head and one tail per a nematode. Any detections that have no overlap with the detected nematode segmentation are not considered for non-max suppression.

In this embodiment, the deep-learning-based image analysis module 20 is configured to determine for each detected nematode 4 a degree of blur of the whole detected nematode 4 as well as of the head and, optionally, tail and vulva morphological regions thereof based on the corresponding nematode image 24. The present inventors have found that blur in the nematode images 24, both with respect to the whole detected nematodes and the head and, optionally, tail and vulva morphological regions thereof, can affect the robustness and reliability of the classification of the detected nematodes 4. Knowing the degree of blur can then help in distinguishing between reliable and unreliable classifications and identifying whether an unreliable classification is caused by nematode blur or a model's lack of confidence in a prediction.

The determination of the degree of blur can, for example, apply the Laplacian operator, which measures how quickly pixel values change, with 4 different kernel sizes. Sharp areas have high values, blurry areas have low values. First, the algorithm can take a nematode image and a segmentation mask and calculate the average blur level by applying the Laplacian operator 4 times, summing the results, and returning the percentage of pixels that are considered in focus based on a comparison with a threshold value.

Here, the deep-learning-based image analysis module 20 is configured to perform a histogram equalization on the segmented nematode images. This helps to ensure a consistent brightness and contrast between the nematode images 24, which can improve the classification of the detected nematodes 4.

In this embodiment, the deep-learning-based nematode classification module 30 for classifying the detected nematodes 4 based on their morphology is a deep-learning-based nematode functional guild classification module for classifying the detected nematodes 4 according to their functional guild based on their morphology. The deep-learning-based functional guild nematode classification module 30 is configured, in this embodiment, to use a fourth deep-learning model to classify the detected nematodes 4 according to their functional guild to obtain a class of a detected nematode 4 with respect to the functional guild, wherein the fourth deep-learning model is applied only on the head morphological region of the detected nematodes. It has been found by the present inventors, that a robust and reliable guild classification can be achieved based on just the head morphological region of the detected nematodes. Therefore, processing requirements can be reduced compared to a guild classification that is based also on further morphological regions (e.g., the tail and vulva morphological regions) of the detected nematodes. The fourth deep-learning model can be a known image recognition model, such as a ResNet152 model (see, for example, K. He et al., "Deep Residual Learning for Image Recognition", https://arxiv.org/abs/1512. 03385). Alternatively, another image recognition model could be used, for example, an EfficientNet model, a ConvNet model, a ResNext model or another ResNet variant.

It is further preferred that the nematode analysis system 1 further comprises:
- a deep-learning-based nematode taxonomy classification module 40 for classifying the detected nematodes 4 according to their taxonomy based on their morphology.

In this embodiment, the deep-learning-based nematode taxonomy classification module 40 is configured to classify a detected nematode 4 according to one or more taxonomy levels using a fifth deep-learning model that is specific to the class of the detected nematode 4 with respect to the functional guild to obtain a class of the detected nematode 4 with respect to each of the one or more taxonomy levels. For example, if the functional guild of the detected nematode 4 is plant-parasitic, the fifth deep-learning model that is used for the taxonomy classification is specific to plant-parasitic nematodes. If the functional guild of the detected nematode 4 is bacterial feeders, the fifth deep-learning model that is used for the taxonomy classification is specific to bacterial feeders. This allows to decrease the number of nematodes that may be unknown due to lack of training at a particular taxonomy level. The one or more taxonomy levels can be, for example, the family, genus, and species of the detected nematode 4. Similar to the fourth deep-learning model, the fifth deep-learning model can be a known image recognition model, such as a ResNet152 model (see, for example, K. He et al., "Deep Residual Learning for Image Recognition", https://arxiv.org/abs/1512.03385). Alternatively, another image recognition model could be used, for example, an EfficientNet model, a ConvNet model, a ResNext model or another ResNet variant.

As shown schematically and exemplarily in Fig. 7, in this embodiment, the fifth deep-learning model comprises multiple deep-learning models 41, 42, 43 that each are applied on a different morphological region of the detected nematode 4, wherein the classification by the fifth deep-learning model makes use of outputs of the multiple deep-learning models 41, 42, 43. For example, one deep-learning model 41 can be applied on the head morphological region of the detected nematode, another deep-learning model 43 can be applied on the tail morphological region of the detected nematode, and yet another deep-learning model 42 can be applied on the vulva morphological region of the detected nematode 4, wherein outputs (e.g., a prediction ("class A") and/or other outputs) of these deep-learning models 41, 42, 43 are fed into a larger "master" model 44 which aggregates the outputs into a common prediction (here, "class A").

In this embodiment, the fifth deep-learning model has been trained using a hierarchical loss function, which provides a stronger penalty for classification errors at higher taxonomy levels than for classification errors at lower taxonomy levels.

Here, the deep-learning-based nematode taxonomy classification module 40 is configured to provide a count of classified nematodes belonging to a same class at each of the one or more taxonomy levels.

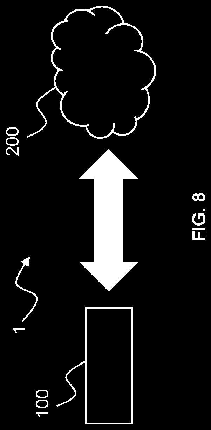

As shown schematically and exemplarily in Fig. 8, the nematode analysis system 1, in this embodiment, comprises a local processing component 100, and a cloud-hosted processing component 200. In this embodiment, the nematode analysis system 1 is configured to distribute its processing between the local processing component 100 and the cloud-hosted processing component 200.

For example, the down-scaling of the image 2 to generate a down-scaled image 21 of lower spatial resolution may be performed on the local processing component 100. The down-scaled image 21 may then be transmitted to the cloud-hosted processing component 200, where the conversion of the down-scaled image 21 into a multi-resolution representation 22 comprising multiple spatial resolution levels #1~#3 and the obtaining of the primary bounding boxes 23 based on all of the multiple spatial resolution levels #1~#3 may be performed. The primary bounding boxes 23 may then be transmitted back to the local processing component 100, where the nematode images 24 corresponding to the obtained primary bounding boxes 23 are cropped out from the image 2 for further processing. The nematode images 23 may then be transmitted to the cloud-hosted processing component 200, where the further processing of the deep-learning-based image analysis module 20 as well as the processing of the deep-learning-based functional guild nematode classification module 30 and, optionally, the processing of the deep-learning-based nematode taxonomy classification module 40 is performed.

In an embodiment, the nematode analysis system 1 is used for creating a plant-parasitic nematode species database, wherein the liquid soil sample 3 is dominated by a monoculture of a single plant-parasitic nematode species, but also comprises nematodes of one or more non-plant-parasitic species, wherein the deep-learning-based nematode classification module 30 is configured to classify the detected nematodes 4 according to their plant-parasitic and non-plant-parasitic functional guild to create the plant-parasitic nematode species database. For this use, the nematode analysis system 1 does not require the deep-learning-based nematode taxonomy classification module 40. Nonetheless, this module may also be comprised by an nematode analysis system 1 that is used for creating a plant-parasitic nematode species database.

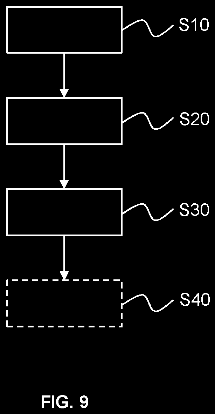

Finally, Fig. 9 shows a flow diagram exemplarily illustrating a nematode analysis method. The nematode analysis method comprises an image providing step S10 of providing an image 2 of a liquid soil sample 3, a deep-learning-based image analysis step S20 of detecting nematodes 4 within the image 2, and a deep-learning-based nematode classification step S30 of classifying the detected nematodes 4 based on their morphology.

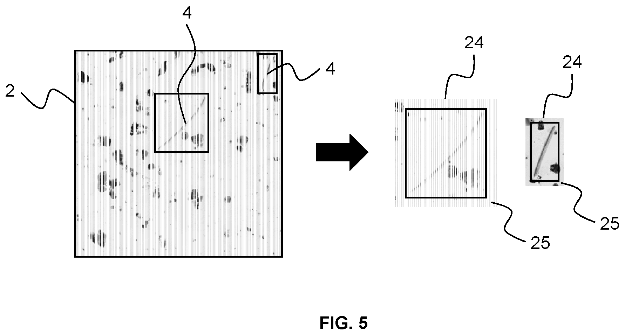

The nematode analysis method can be performed with the nematode analysis system 1 described with reference to Fig. 1 to 8 above.

In the above-described embodiment, the image is an image mosaic and the image providing module 10 comprises an imager 11 including optics 12 and an image sensor 13, and a sample support 14 for supporting the liquid soil sample 3, wherein the image providing module 10 is configured to automatically move the imager 11 along an acquisition path 15, to automatically acquire a plurality of partially overlapping sub-images 16 of the liquid soil sample 3 from different positions on the acquisition path 15, and to automatically stitch the sub-images together to generate the image 2. In other embodiments, this does not have to be the case. For example, the image does not have to be an image mosaic and/or the image providing module may be different. For example, it may comprise a data interface configured to access an image stored in a local or remote memory, such as a hard disk drive, a solid-state memory, an optical storage medium, or the like, or it may also comprise a communication interface, for example, a wired or wireless network interface, arranged to receive an image from an external source, such as a server or a cloud-hosted storage system. In certain embodiments, the image providing module may comprise a combination of image providing hardware and memory access or communication means. Generally, the image provided by the image providing module may represent at least a portion of the liquid soil sample. The image may contain one or more nematodes suspended in the liquid soil sample. In some embodiments, the image may contain only a single nematode, while in other embodiments the image may contain multiple nematodes or partial representations thereof.

The invention is described in the following in a list of embodiments:
Embodiment 1. A nematode analysis system, comprising:
   - an image providing module for providing an image of a liquid soil sample;
   - a deep-learning-based image analysis module for detecting nematodes within the image, and;
   - a deep-learning-based nematode classification module for classifying the detected nematodes based on their morphology.
Embodiment 2. The nematode analysis system according to embodiment 1, wherein the image is an image mosaic.
Embodiment 3. The nematode analysis system according to embodiment 2, wherein the image providing module comprises:
   - an imager including optics and an image sensor, and;
   - a sample support for supporting the liquid soil sample,
   wherein the image providing module is configured to automatically move the imager along an acquisition path, to automatically acquire a plurality of partially overlapping sub-images of the liquid soil sample from different positions on the acquisition path, and to automatically stitch the sub-images together to generate the image.
Embodiment 4. The nematode analysis system according to any of embodiments 1 to 3, wherein the deep-learning-based image analysis module is configured to down-scale the image to generate a down-scaled image of lower spatial resolution and to obtain primary bounding boxes corresponding to the nematodes based on the down-scaled image.
Embodiment 5. The nematode analysis system according to embodiment 4, wherein the deep-learning-based image analysis module is configured to convert the down-scaled image into a multi-resolution representation comprising multiple spatial resolution levels and to obtain the primary bounding boxes based on all of the multiple spatial resolution levels.
Embodiment 6. The nematode analysis system according to embodiment 4 or 5, wherein the deep-learning-based image analysis module is configured to use a first deep-learning model to obtain the primary bounding boxes.
Embodiment 7. The nematode analysis system according to embodiment 6, wherein the deep-learning-based image analysis module is configured to obtain the primary bounding boxes based on a plurality of partially overlapping sub-images of the multi-resolution representation that are selected with an overlapping sliding window and to perform test-time augmentation on the sub-images during an inference stage of the first deep-learning model.
Embodiment 8. The nematode analysis system according to any of embodiments 4 to 7, wherein the deep-learning-based image analysis module is configured to obtain the primary bounding boxes together with the following metadata that is provided for each primary bounding box:
   (i) an area size value indicating the area size of the primary bounding box,
   (ii) a confidence value indicating a confidence that the primary bounding box includes a nematode,
   (iii) a class value indicating whether the nematode is of a class corresponding to a complete nematode or a class corresponding to an incomplete nematode, and
   (iv) a class probability value indicating a probability that the nematode is of the class indicated by the class value,
   wherein the deep-learning-based image analysis module is configured to perform a non-max suppression on the obtained primary bounding boxes, wherein the non-max suppression is based on the area size values, the confidence values, the class values, and the class probability values of the obtained primary bounding boxes.
Embodiment 9. The nematode analysis system according to embodiment 8, wherein the non-max suppression is further based on a comparison of a Distance Intersection over Union, DloU, between two obtained primary bounding boxes, respectively.
Embodiment 10. The nematode analysis system according to any of embodiments 4 to 9, wherein the deep-learning-based image analysis module (20) is configured to crop out nematode images corresponding to the obtained primary bounding boxes from the image for further processing.
Embodiment 11. The nematode analysis system according to embodiment 10, wherein the nematode images are cropped out with an additional margin on all sides of the obtained primary bounding boxes.
Embodiment 12. The nematode analysis system according to any of embodiments 1 to 11, wherein the deep-learning-based image analysis module is configured to segment the detected nematodes using a second deep-learning model.
Embodiment 13. The nematode analysis system according to embodiment 12, wherein the deep-learning-based image analysis module is configured to skeletonize the detected and segmented nematodes and to determine two endpoints of the detected nematodes based on the detected, segmented and skeletonized nematodes.
Embodiment 14. The nematode analysis system according to embodiment 13, wherein the deep-learning-based image analysis module is configured to obtain a graph representation of a detected, segmented and skeletonized nematode, to determine possible endpoints using a kernel function that considers a count of neighboring segments of the graph representation, and to determine the possible endpoints with the longest path along the graph representation therebetween of the detected, segmented and skeletonized nematode to be the two endpoints of the corresponding detected nematode.
Embodiment 15. The nematode analysis system according to embodiment 13 or 14, wherein the deep-learning-based image analysis module is configured to use a third deep-learning model to obtain secondary bounding boxes corresponding to the head and, optionally, tail and vulva, and morphological regions of a detected nematode, respectively, based on the image or the corresponding nematode image, respectively.
Embodiment 16. The nematode analysis system according to embodiment 15, wherein the deep-learning-based image analysis module is configured to perform a non-max suppression on the obtained secondary bounding boxes, wherein the non-max suppression considers whether the secondary bounding boxes include the endpoints of the detected nematode.
Embodiment 17. The nematode analysis system according to any of embodiments 12 to 16, wherein the deep-learning-based image analysis module is configured to determine for each detected nematode a degree of blur of the whole detected nematode as well as of the head and, optionally, tail and vulva morphological regions thereof based on the image or the corresponding nematode image, respectively.
Embodiment 18. The nematode analysis system according to any of embodiments 12 to 17, wherein the deep-learning-based image analysis module is configured to perform a histogram equalization on the segmented image or the segmented nematode images, respectively.
Embodiment 19. The nematode analysis system according to any of embodiments 1 to 18, wherein the deep-learning-based nematode classification module for classifying the detected nematodes based on their morphology is a deep-learning-based nematode functional guild classification module for classifying the detected nematodes according to their functional guild based on their morphology.
Embodiment 20. The nematode analysis system according to embodiment 19, wherein the deep-learning-based nematode functional guild classification module is configured to use a fourth deep-learning model to classify the detected nematodes according to their functional guild to obtain a class of a detected nematode with respect to the functional guild, wherein the fourth deep-learning model is applied only on the head morphological region of the detected nematodes.
Embodiment 21. The nematode analysis system according to any of embodiment 1 to 20, further comprising:
   - a deep-learning-based nematode taxonomy classification module for classifying the detected nematodes according to their taxonomy based on their morphology.
Embodiment 22. The nematode analysis system according to embodiment 21, wherein the deep-learning-based nematode taxonomy classification module is configured to classify a detected nematode according to one or more taxonomy levels using a fifth deep-learning model that is specific to the class of the detected nematode with respect to the functional guild to obtain a class of the detected nematode with respect to each of the one or more taxonomy levels.
Embodiment 23. The nematode analysis system according to embodiment 22, wherein the fifth deep-learning model comprises multiple deep-learning models that each are applied on a different morphological region of the detected nematode, wherein the classification by the fifth deep-learning model makes use of outputs of the multiple deep-learning models.
Embodiment 24. The nematode analysis system according to embodiment 21 or 23, wherein the fifth deep-learning model has been trained using a hierarchical loss function, which provides a stronger penalty for classification errors at higher taxonomy levels than for classification errors at lower taxonomy levels.
Embodiment 25. The nematode analysis system according to any of embodiments 20 to 24, wherein the deep-learning-based nematode taxonomy classification module is configured to provide a count of classified nematodes belonging to a same class at each of the one or more taxonomy levels.
Embodiment 26. The nematode analysis system according to any of embodiments 1 to 25, comprising:
   - a local processing component, and
   - a cloud-hosted processing component,
   wherein the nematode analysis system is configured to distribute its processing between the local processing component and the cloud-hosted processing component.
Embodiment 27. Use of the nematode analysis system of claim 19 or 20 for creating a plant-parasitic nematode species database, wherein the liquid soil sample is dominated by a monoculture of a single plant-parasitic nematode species, but also comprises nematodes of one or more non-plant-parasitic species, wherein the deep-learning-based nematode classification module is configured to classify the detected nematodes according to their plant-parasitic and non-plant-parasitic functional guild to create the plant-parasitic nematode species database.
Embodiment 28. A nematode analysis method, comprising:
   - an image providing step of providing an image of a liquid soil sample;
   - a deep-learning-based image analysis step of detecting nematodes within the image, and;
   - a deep-learning-based nematode classification step of classifying the detected nematodes based on their morphology.

Further variations of the disclosed embodiments can be understood and performed by a skilled person practicing the claimed invention based on the drawings, the description, and dependent claims.

In the claims, the terms "contain" and "comprise" do not exclude further elements or steps and the indefinite article "a" does not exclude a plurality.

A single unit or apparatus can perform the function of multiple elements that are recited in the claims. The fact that individual functions and/or elements are recited in different dependent claims does not mean that a combination of these functions and/or elements could not be used to advantage.

The reference numerals in the claims are not to be understood in the sense that the subject matter and the scope of protection of the claims would be limited by these reference numerals.

In conclusion, a nematode analysis system is described, comprising an image providing module for providing an image of a liquid soil sample, a deep-learning-based image analysis module for detecting nematodes within the image, and a deep-learning-based nematode classification module for classifying the detected nematodes based on their morphology, wherein the deep-learning-based image analysis module is configured to segment the detected nematodes using a second deep-learning model, wherein the deep-learning-based image analysis module is configured to skeletonize the detected and segmented nematodes and to determine two endpoints of the detected nematodes based on the detected, segmented and skeletonized nematodes.

## Claims

1. A nematode analysis system (1), comprising:
- an image providing module (10) for providing an image (2) of a liquid soil sample (3);
- a deep-learning-based image analysis module (20) for detecting nematodes (4) within the image (2), and;
- a deep-learning-based nematode classification module (30) for classifying the detected nematodes (4) based on their morphology,
wherein the deep-learning-based image analysis module (20) is configured to segment the detected nematodes using a second deep-learning model,
wherein the deep-learning-based image analysis module (20) is configured to skeletonize the detected and segmented nematodes and to determine two endpoints of the detected nematodes (4) based on the detected, segmented and skeletonized nematodes.

2. The nematode analysis system (1) according to claim 1, wherein the image (2) is an image mosaic.

3. The nematode analysis system (1) according to claim 2, wherein the image providing module (10) comprises:
- an imager (11) including optics (12) and an image sensor (13), and;
- a sample support (14) for supporting the liquid soil sample (3),
wherein the image providing module (10) is configured to automatically move the imager (11) along an acquisition path (15), to automatically acquire a plurality of partially overlapping sub-images (16) of the liquid soil sample (3) from different positions on the acquisition path (15), and to automatically stitch the sub-images together to generate the image (2).

4. The nematode analysis system (1) according to any of claims 1 to 3, wherein the deep-learning-based image analysis module (20) is configured to down-scale the image (2) to generate a down-scaled image (21) of lower spatial resolution and to obtain primary bounding boxes (22) corresponding to the nematodes (4) based on the down-scaled image (21).

5. The nematode analysis system (1) according to claim 4, wherein the deep-learning-based image analysis module (20) is configured to convert the down-scaled image (21) into a multi-resolution representation (22) comprising multiple spatial resolution levels (#1~#3) and to obtain the primary bounding boxes (23) based on all of the multiple spatial resolution levels (#1∼#3).

6. The nematode analysis system (1) according to claim 4 or 5, wherein the deep-learning-based image analysis module (20) is configured to use a first deep-learning model to obtain the primary bounding boxes (23).

7. The nematode analysis system (1) according to claim 6, wherein the deep-learning-based image analysis module (20) is configured to obtain the primary bounding boxes (23) based on a plurality of partially overlapping sub-images of the multi-resolution representation (22) that are selected with an overlapping sliding window and to perform test-time augmentation on the sub-images during an inference stage of the first deep-learning model.

8. The nematode analysis system (1) according to any of claims 4 to 7, wherein the deep-learning-based image analysis module (20) is configured to obtain the primary bounding boxes (23) together with the following metadata that is provided for each primary bounding box (23):
(i) an area size value indicating the area size of the primary bounding box (23),
(ii) a confidence value indicating a confidence that the primary bounding box (23) includes a nematode (4),
(iii) a class value indicating whether the nematode (4) is of a class corresponding to a complete nematode or a class corresponding to an incomplete nematode, and
(iv) a class probability value indicating a probability that the nematode (4) is of the class indicated by the class value,
wherein the deep-learning-based image analysis module (20) is configured to perform a non-max suppression on the obtained primary bounding boxes (23), wherein the non-max suppression is based on the area size values, the confidence values, the class values, and the class probability values of the obtained primary bounding boxes (23).

9. The nematode analysis system (1) according to any of claims 1 to 8, wherein the deep-learning-based image analysis module (20) is configured to obtain a graph representation of a detected, segmented and skeletonized nematode, to determine possible endpoints using a kernel function that considers a count of neighboring segments of the graph representation, and to determine the possible endpoints with the longest path along the graph representation therebetween of the detected, segmented and skeletonized nematode to be the two endpoints of the corresponding detected nematode (4).

10. The nematode analysis system (1) according to any of claims 1 to 9, wherein the deep-learning-based image analysis module (20) is configured to use a third deep-learning model to obtain secondary bounding boxes (26) corresponding to the head and, optionally, tail and vulva morphological regions of a detected nematode (4), respectively, based on the image or the corresponding nematode image (24), respectively.

11. The nematode analysis system (1) according to claim 10, wherein the deep-learning-based image analysis module (20) is configured to perform a non-max suppression on the obtained secondary bounding boxes (26), wherein the non-max suppression considers whether the secondary bounding boxes (26) include the endpoints of the detected nematode (4).

12. The nematode analysis system (1) according to any of claims 1 to 11, wherein the deep-learning-based image analysis module (20) is configured to determine for each detected nematode (4) a degree of blur of the whole detected nematode (4) as well as of the head and, optionally, tail and vulva morphological regions thereof based on the image (2) or the corresponding nematode image (24), respectively.

13. The nematode analysis system according to any of claims 1 to 12, wherein the deep-learning-based nematode classification module (30) for classifying the detected nematodes (4) based on their morphology is a deep-learning-based nematode functional guild classification module for classifying the detected nematodes (4) according to their functional guild based on their morphology.

14. The nematode analysis system (1) according to claim 13, wherein the deep-learning-based nematode functional guild classification module (30) is configured to use a fourth deep-learning model to classify the detected nematodes (4) according to their functional guild to obtain a class of a detected nematode (4) with respect to the functional guild, wherein the fourth deep-learning model is applied only on the head morphological region of the detected nematodes (4).

15. A nematode analysis method, comprising:
- an image providing step (S10) of providing an image (2) of a liquid soil sample (3);
- a deep-learning-based image analysis step (S20) of detecting nematodes (4) within the image (2), and;
- a deep-learning-based nematode classification step (S30) of classifying the detected nematodes (4) based on their morphology,
wherein the deep-learning-based image analysis step (S20) segments the detected nematodes (4) using a second deep-learning model,
wherein the deep-learning-based image analysis step (S20) skeletonizes the detected and segmented nematodes and determines two endpoints of the detected nematodes (4) based on the detected, segmented and skeletonized nematodes.
